(19) Europäisches Patentamt

European Patent Office

Office européen des brevets

(11) Veröffentlichungsnummer: **0 609 675 A2**

# (12) EUROPÄISCHE PATENTANMELDUNG

(21) Anmeldenummer: **94100432.7**

(22) Anmeldetag: **13.01.94**

(51) Int. Cl.5: **B32B 1/08**, F16L 11/12

(30) Priorität: **30.01.93 DE 4302628**

(43) Veröffentlichungstag der Anmeldung:
**10.08.94 Patentblatt 94/32**

(84) Benannte Vertragsstaaten:
**DE ES FR GB IT NL SE**

(71) Anmelder: **HÜLS AKTIENGESELLSCHAFT**

**D-45764 Marl(DE)**

(72) Erfinder: **Böer, Michael**
**Lohhäuser Strasse 2**
**D-45739 Oer-Erkenschwick(DE)**
Erfinder: **Herrmann, Hans-Dieter**
**Pommernstrasse 9**
**D-45770 Marl(DE)**
Erfinder: **Ries, Hans, Dr.**
**Begonienstrasse 9**
**D-45772 Marl(DE)**
Erfinder: **Röber, Stefan, Dr.**
**Max-Reger-Strasse 138**
**D-45772 Marl(DE)**

(54) **Mehrschichtiges Kunststoffrohr.**

(57) Es soll ein Kunststoffrohr mit verbesserter Beständigkeit u. a. gegen Methanolhaltige Kraftstoffe und verbesserten mechanischen Eigenschaften zur Verfügung gestellt werden.

Dies wird erreicht durch ein mehrschichtiges Kunststoffrohr bestehend aus einer Außenschicht auf Basis von Polyamid und einer der Außenschicht benachbarten Schicht aus einem weichmacherfreien Polyvinylidenfluorid.

Mit Hilfe der Erfindung gelingt es, Kunststoffrohre mit dem gewünschten verbesserten Eigenschaftsbild zu erhalten.

EP 0 609 675 A2

Gegenstand der Erfindung ist ein mehrschichtiges Kunststoffrohr bestehend aus einer Außenschicht I. aus einer Formmasse auf Basis eines Polyamids und einer der Außenschicht benachbarten weiteren Schicht II. aus einer Formmasse auf Basis von Polyvinylidenfluorid.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In FR-PS 2 602 515 wird ein zweischichtiges Rohr aus einer Außenschicht aus Polyamid 11 und einer inneren Schicht aus weichgemachtem Polyvinylidenfluorid beschrieben. Untersuchungen haben jedoch gezeigt, daß die Sperrwirkung gegenüber dem durchfließendem Medium nicht befriedigt.

Vor allem die Permeation von Methanol-haltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Aufgabe der Erfindung war es, ein Polyamidrohr mit einer guten Sperrwirkung gegen das transportierte Medium, vor allem gegenüber Methanol-haltigen Kraftstoffen, einer zufriedenstellenden Maßhaltigkeit sowie einer befriedigenden mechanischen Belastbarkeit zu entwickeln. Insbesondere sollten die erreichten Verbesserungen auch bei höheren Temperaturen erhalten bleiben.

Diese Aufgabe wird gelöst durch ein mehrschichtiges Kunststoffrohr mit einer Außenschicht I. und einer benachbarten Schicht II., wobei die Schicht II. ein weichmacherfreies Polyvinylidenfluorid mit einem Melt Flow Index < 14 g/10 min (nach DIN 53 735 - 230 °C - 5 kg Belastung) enthält und das Verhältnis der Stärke der Schicht II. zur Schichtstärke von I. und II. 1 : 3 bis 1 : 20 beträgt.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer $\alpha$, $\omega$-Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)-methan, Trimethylhexamethylendiamin, Hexamethylendiamin o. ä. Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Wiley & Sons (1982), S. 328 und 435, beschrieben werden. Als Polyamide geeignete Polykondensate sind gleichfalls Poly-(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität ($\eta_{rel}$) im Bereich von 1,9 bis 2,4.

Die Polyamide der Außenschicht I. können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien- (Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisat (**Ullmanns Encyclopädie der technischen Chemie**, 4. Auflage, Bd. 19, Verlag Chemie

2

EP 0 609 675 A2

Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide der Außenschicht I. schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen $T_g$ < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Die Schicht II. enthält weichmacherfreies Polyvinylidenfluorid. Herstellung und Struktur des Polymeren sind bekannt. (Hans R. Kricheldorf, **Handbook of Polymer Synthesis**, Part A, Verlag Marcel Dekker Inc. New York - Basel - Hongkong, S. 191 f; **Kunststoff Handbuch**, 1. Auflage, Band XI, Carl Hanser Verlag München (1971), S. 403 ff).

Es können auch Copolymere auf Basis von Polyvinylidenfluorid erfindungsgemäß enthalten sein, die bis zu 40 Gew.-% an anderen Monomeren enthalten können. Als solche zusätzlichen Monomere seien beispielhaft genannt: Trifluorethylen, Ethylen, Propen und Hexafluorpropen.

Das eingesetzte erfindungsgemäße Polyvinylidenfluorid weist einen Melt Flow Index von < 14 g/10 min, vorzugsweise von 5 bis 13 g/10 min (DIN 53 735) auf.

Die Stärke der Schicht II. liegt im Bereich von 0,05 bis 0,2 mm, vorzugsweise bei 0,1 bis 0,15 mm. Die Rohrwand weist eine Gesamtstärke im Bereich von 0,5 bis 2 mm, vorzugsweise von 1 bis 1,5 mm, auf. Das Verhältnis der Stärke der Schicht II. zur Schichtstärke von I. und II. beträgt 1 : 3 bis 1 : 20, vorzugsweise 1 : 4 bis 1 : 10. Der Durchmesser der Rohre liegt im Bereich von 6 bis 16 mm.

Bei den erfindungsgemäßen Mehrschichtrohren können neben der Schicht I. und der benachbarten Schicht II. rohrinnenseitig noch weitere Schichten aufgebracht sein. Beispielhaft sei hier eine Schicht aus modifiziertem Polyvinylidenfluorid angeführt, das gegenüber dem Polyvinylidenfluorid der Schicht II. eine deutlich erhöhte elektrische Leitfähigkeit aufweist.

Die Formmassen für die Schichten gemäß I. sowie II. können übliche Hilfs- und Zusatzstoffe wie z. B. Flammschutzmittel, Stabilisatoren, Verarbeitungshilfsmittel, Viskositätsverbesserer, Füllstoffe, insbesondere solche zur Verbesserung der Leitfähigkeit, Pigmente o. ä. zugefügt werden. Die Formmassen der Schicht I. bzw. anderer Schichten als Schicht II. können auch Weichmacher bzw. Schlagzähmodifier enthalten.

Die Fertigung der mehrschichtigen Rohre erfolgt in bekannter, wie z. B. weiter oben im Stand der Technik beschriebenen Weise. Bevorzugt werden die Rohre auf dem Wege der Coextrusion hergestellt.

Die erfindungsgemäßen mehrschichtigen Rohre weisen in hervorragendem Maße - auch bei erhöhter Temperatur - eine gute Beständigkeit sowie gute Sperrwirkung gegen Diffusion gegenüber (petro)-chemischen Stoffen, Lösemitteln und Kraftstoffen auf. Darüber hinaus ist es auch möglich, neben einem 2-Schichtrohr andere Rohrtypen mit 3 oder mehr Schichten herzustellen. Bevorzugt sind erfindungsgemäße mehrschichtige Rohre, bei denen die Schicht II. elektrisch leitfähig eingestellt ist. Auch ist es möglich, dadurch eine gute Leitfähigkeit zu erreichen, daß nach innen benachbart zur Schicht II. eine weitere Polyvinylidenschicht eingearbeitet ist, die eine hohe Leitfähigkeit aufweist. Eine gute elektrische Leitfähigkeit wird durch Zugabe von bis zu 15 Gew.-% von z. B. Leitfähigkeitsruß, Kohlenstoffasern o. ä. erhalten.

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff. Eine weitere Verwendung der mehrschichtigen Rohre besteht darin, daß aus ihnen Hohlkörper, wie Tankbehälter oder Einfüllstutzen, insbesondere für den Kraftfahrzeugsektor, hergestellt werden.

Die in den Beispielen aufgeführten Ergebnisse wurden mit Hilfe nachstehender Meßverfahren bestimmt.

Die **Bestimmung der Lösungsviskosität** (rel. Viskosität $\eta_{rel}$) **der Polyamide** erfolgt unter Verwendung einer 0,5 Gew.-%igen m-Kresol-Lösung bei 25 °C gemäß DIN 53 727/ISO 307.

Die **Bestimmung des Melt Flow Index der Polyvinylidenfluoride** erfolgt gemäß DIN 53 735 bei 230 °C und unter einer Belastung von 5 kg.

Die **Bestimmung der Durchbiegung** erfolgt an einem 15 cm langen Rohr bei 23 °C. Das Rohr liegt an zwei Punkten auf, die 80 mm von einander entfernt sind. In der Mitte zwischen den beiden Auflagepunkten wird das Rohr von oben mit einem Gewicht von 40 N belastet. Die Durchbiegung des Rohres wird in mm bestimmt (DIN 53 452).

Die **Bestimmung der Diffusion** von Kraftstoffanteilen erfolgt an Rohren mit einem Kraftstoffgemisch (Kraftstoff FAM B: 25,35 Vol.-% Iso-Octan; 42,25 Vol.-% Toluol; 12,675 Vol.-% Di-isobutylen; 4,225 Vol.-% Ethanol; 15 Vol.-% Methanol; 0,5 Vol.-% Wasser) bei 23 °C bzw. bei 60 ° C und 50 % Luftfeuchtigkeit. Die

3

EP 0 609 675 A2

Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß. -

**Beispiele**

**A. Komponente I.**

**PA 1:** Polyamid 12 hart ($\eta_{rel}$: 2,1; Weichmachergehalt: 0)
**PA 2:** Polyamid 12 weich ($\eta_{rel}$: 2,1; Weichmacher: n-Butyl-Benzolsäure-Sulfonamid; Weichmachergehalt: 15 Gew.-Tle. auf 100 Gew. -Tle. Polyamid).
**PA 3:** Polyamid 12 hart ($\eta_{rel}$: 1,9; Weichmachergehalt: 0)
**PA 4:** Polyamid 6.12 hart ($\eta_{rel:}$ 1,9; Weichmachergehalt: 0)

**B. Komponente II.**

**Z 1:** Polyvinylidenfluorid hart [Melt Flow Index: 13 g/10 min; Weichmachergehalt: 0; DYFLOR® LE (HÜLS AG)]
**Z 2:** Polyvinylidenfluorid weich [Melt Flow Index: 13 g/10 min; Weichmacher: n-Butyl-Benzolsäure-Sulfonamid; Weichmachergehalt: 15 Gew.-Tle. auf 100 Gew.-Tle. Polyvinylidenfluorid; DYFLOR® LE (HÜLS AG)]
**Z 3:** Polyvinylidenfluorid hart [Melt Flow Index: 8,5 g/10 min; Weichmachergehalt: 0; DYFLOR® EE (HÜLS AG)]
**Z 4:** Polyvinylidenfluorid weich [Melt Flow Index: 8,5 g/10 min; Weichmacher: n-Butyl-Benzolsäure-Sulfonamid; Weichmachergehalt: 15 Gew.-Tle. auf 100 Gew.-Tle. Polyvinylidenfluorid; DYFLOR® EE (HÜLS AG)]

**C. Herstellung der mehrschichtigen Rohre**

Auf einer 5-Schicht-Rohr-Coextrusionsanlage, bei der 3 Kanäle geschlossen bleiben, werden bei einer Abzugsgeschwindigkeit von 20 m/min und mit einem Abzugsverhältnis von 2 : 1 2-Schichtrohre (Außendurchmesser: 8 mm Gesamtwandstärke: 1 mm) hergestellt. Für die Außenschicht wird ein 45 mm/25 D Extruder (Schmelzetemperatur : 230 °C) und für die Innenschicht ein 25 mm/25 D Extruder (Schmelzetemperatur: 220 °C) eingesetzt.

4

Tabelle

| Versuch | Innenschicht | | Außenschicht | | Diffusion (23 °C) [g/m² · d] | Diffusion (60 °C) [g/m² · d] | Durchbiegung [mm] |
|---|---|---|---|---|---|---|---|
| | | Wandstärke [mm] | | Wandstärke [mm] | | | |
| A | Z 2 | 0,2 | PA 1 | 0,8 | 1,0 | 16 | 3,3 |
| 1 | Z 1 | 0,1 | PA 1 | 0,9 | 1,1 | 11 | 2,4 |
| B | Z 2 | 0,2 | PA 2 | 0,8 | 1,2 | 20 | 13,1 |
| 2 | Z 1 | 0,1 | PA 2 | 0,9 | 1,3 | 13 | 12,3 |
| C | Z 2 | 0,2 | PA 3 | 0,8 | 1,1 | 17 | 3,0 |
| 3 | Z 1 | 0,1 | PA 3 | 0,9 | 1,1 | 11 | 2,9 |
| D | Z 4 | 0,2 | PA 3 | 0,8 | 1,1 | 16 | 3,1 |
| 4 | Z 3 | 0,1 | PA 3 | 0,9 | 1,1 | 10 | 2,8 |
| E | Z 2 | 0,2 | PA 4 | 0,8 | 1,0 | 16 | - *) |
| 5 | Z 1 | 0,2 | PA 4 | 0,8 | < 0,9 | < 8 | - *) |

*) nicht bestimmt

## Patentansprüche

1. Mehrschichtiges Kunststoffrohr bestehend aus einer Außenschicht I. aus einer Formmasse auf Basis eines Polyamids und einer der Außenschicht benachbarten weiteren Schicht II. aus einer Formmasse auf Basis von Polyvinylidenfluorid,
dadurch gekennzeichnet,
daß die Schicht II. ein weichmacherfreies Polyvinylidenfluorid mit einem Melt Flow Index von < 14 g/10 min (nach DIN 53 735 - 230 °C - 5 kg Belastung) enthält und das Verhältnis der Stärke der Schicht II. zur Schichtstärke von I. und II. 1 : 3 bis 1 : 20 beträgt.

2. Mehrschichtiges Kunststoffrohr nach Anspruch 1,
dadurch gekennzeichnet,
daß das in der Schicht II. enthaltene Polyvinylidenfluorid einen Melt Flow Index von 5 bis 13 g/10 min aufweist.

3. Mehrschichtiges Kunststoffrohr nach den Ansprüchen 1 und 2,
dadurch gekennzeichnet,
daß das Verhältnis der Stärke der Schicht II. zur Schichtstärke von I. und II. 1 : 4 bis 1 : 10 beträgt.

4. Mehrschichtiges Kunststoffrohr nach den Ansprüchen 1 bis 3,
dadurch gekennzeichnet,
daß das Kunststoffrohr neben den Schichten gemäß I. bzw. II. noch mindestens eine weitere Schicht aufweist.

5. Verwendung des mehrschichtigen Kunststoffrohres nach den Ansprüchen 1 bis 4 für den Transport (petro)chemischer Stoffe.

6. Verwendung des mehrschichtigen Kunststoffrohres nach den Ansprüchen 1 bis 4 auf dem Kraftfahrzeugsektor zum Druchleiten von Brems-, Kühl- und Hydraulikflüssigkeiten sowie Kraftstoff.

7. Verwendung des mehrschichtigen Kunststoffrohres nach den Ansprüchen 1 bis 4 zur Herstellung von Hohlkörpern.

8. Verwendung des mehrschichtigen Kunststoffrohres nach den Ansprüchen 1 bis 4 zur Herstellung von Einfüllstutzen oder Tankbehältern im Kraftfahrzeugsektor.